# EUROPEAN PATENT APPLICATION

(11) **EP 4 398 328 A1**
(43) Date of publication of application: **10.07.2024**
(21) Application number: 22864078.5
(22) Date of filing: 19.07.2022
(51) Int. Cl.: H01M 4/13, H01M 4/62, H01M 10/052, H01M 10/0587

(54) **NON-AQUEOUS ELECTROLYTE SECONDARY BATTERY**

(30) Priority: 31.08.2021 JP 2021141475
(71) Applicant: Panasonic Energy Co., Ltd., Osaka 570-8511 (JP)
(72) Inventor: SAKITANI, Nobuhiro, Kadoma-shi, Osaka 571-0057 (JP)
(74) Representative: Novagraaf International SA
(86) International application number: PCT/JP2022/027973
(87) International publication number: WO 2023/032490

(57) **Abstract**

A non-aqueous electrolyte secondary battery is provided which enables improving charge/discharge cycle characteristics. This non-aqueous electrolyte secondary battery is provided with an electrode body which comprises a first electrode and a second electrode with mutually different polarities that face each other across from a separator, and a battery case which houses the electrode body. The first electrode has a mixed layer that contains a conductive agent, and, used in a state in which a non-aqueous electrolyte secondary battery is fixed, the mixed layer has a first region on the upper side in the vertical direction and a second region on the lower side in the vertical direction; the void ratio of the mixed layer in the first region is higher than the void ratio of the mixed layer in the second region, and the conductive agent content ratio in the first region is lower than the conductive agent content ratio in the second region; and the conductive agent contained in the first region contains fibrous carbon and the conductive agent contained in the second region contains granular carbon.

## Description

### TECHNICAL FIELD

The present disclosure relates to a non-aqueous electrolyte secondary battery.

### BACKGROUND

In recent years, as secondary batteries with high output and high energy density, non-aqueous electrolyte secondary batteries have been widely used, which perform charging and discharging by moving lithium ions or the like between a positive electrode and a negative electrode via a non-aqueous electrolyte.

There are cases where battery capacity of a non-aqueous electrolyte secondary battery decreases due to repeated charging and discharging, and studies have been conducted for improving the charge-discharge cycle characteristic of non-aqueous electrolyte secondary batteries. Patent Literature 1 discloses a technique of improving the charge-discharge cycle characteristic of a non-aqueous electrolyte secondary battery having a spiral-type electrode assembly by configuring such that the porosity of the electrode assembly toward the winding center is higher than the porosity of the electrode assembly toward the peripheral edge, and also such that the content of the conductive agent in the electrode assembly toward the winding center is higher than the content of the conductive agent in the electrode assembly toward the peripheral edge.

### CITATION LIST

### PATENT LITERATURE

PATENT LITERATURE 1: Japanese Unexamined Patent Application Publication No. 2011-165388

### SUMMARY

### TECHNICAL PROBLEM

When a non-aqueous electrolyte secondary battery is used in a stationary state, the non-aqueous electrolyte within the battery may become unevenly densely distributed in a lower part due to gravity. In that case, when charging and discharging are repeated, the non-aqueous electrolyte content becomes different between an upper part and the lower part of the battery, and a difference in the degree of deterioration is also generated, resulting in degradation of the charge-discharge cycle characteristic.

An object of the present disclosure is to provide a non-aqueous electrolyte secondary battery in which the charge-discharge cycle characteristic can be improved.

### SOLUTION TO PROBLEM

A non-aqueous electrolyte secondary battery according to an aspect of the present disclosure includes an electrode assembly in which a first electrode and a second electrode having polarities different from each other are located facing each other across a separator, and a battery housing that houses the electrode assembly. The first electrode has a mixture layer containing a conductive agent. When the non-aqueous electrolyte secondary battery is used in a fixed state, the mixture layer has a first region located toward an upper part in a vertical direction, and a second region located toward a lower part in the vertical direction. The porosity of the mixture layer in the first region is higher than the porosity of the mixture layer in the second region. The content of the conductive agent in the first region is lower than the content of the conductive agent in the second region. Furthermore, the conductive agent contained in the first region includes fibrous carbon, and the conductive agent contained in the second region includes granular carbon.

A non-aqueous electrolyte secondary battery according to an aspect of the present disclosure includes an electrode assembly in which a first electrode and a second electrode having polarities different from each other are located facing each other across a separator, a bottomed tubular outer can that houses the electrode assembly, and a sealing assembly that closes an opening of the outer can. The first electrode has a mixture layer containing a conductive agent. Assuming that a direction in which the electrode assembly is inserted into the outer can is an insertion direction, the mixture layer has a first region located toward the sealing assembly in the insertion direction, and a second region located toward a bottom portion of the outer can in the insertion direction. The porosity of the mixture layer in the first region is higher than the porosity of the mixture layer in the second region. The content of the conductive agent in the first region is lower than the content of the conductive agent in the second region. Furthermore, the conductive agent contained in the first region includes fibrous carbon, and the conductive agent contained in the second region includes granular carbon.

A non-aqueous electrolyte secondary battery according to an aspect of the present disclosure includes an electrode assembly in which a first electrode and a second electrode having polarities different from each other are located facing each other across a separator, a bottomed tubular outer can that houses the electrode assembly, and a sealing assembly that closes an opening of the outer can. The first electrode has a mixture layer containing a conductive agent. Assuming that a direction in which the electrode assembly is inserted into the outer can is an insertion direction, the mixture layer has a first region located toward the sealing assembly in the insertion direction, and a second region located toward a bottom portion of the outer can in the insertion direction. The porosity of the mixture layer in the second region is higher than the porosity of the mixture layer in the first region. The content of the conductive agent in the second region is lower than the content of the conductive agent in the first region. Furthermore, the conductive agent contained in the second region includes fibrous carbon, and the conductive agent contained in the first region includes granular carbon.

### ADVANTAGEOUS EFFECTS OF INVENTION

According to an aspect of the present disclosure, the charge-discharge cycle characteristic can be improved.

### BRIEF DESCRIPTION OF DRAWINGS

[FIG. 1] FIG. 1 is a cross-sectional view of a non-aqueous electrolyte secondary battery according to an example embodiment.
[FIG. 2] FIG. 2 is a side view showing the non-aqueous electrolyte secondary battery of FIG. 1 in a fixed state.
[FIG. 3] FIG. 3 is a perspective view of a spiral-type electrode assembly used in the non-aqueous electrolyte secondary battery of FIG. 2.
[FIG. 4] FIG. 4 is a side view showing the non-aqueous electrolyte secondary battery of FIG. 1 in a fixed state according to another example.
[FIG. 5] FIG. 5 is a perspective view of a spiral-type electrode assembly used in the non-aqueous electrolyte secondary battery of FIG. 4.
[FIG. 6] FIG. 6 is a developed perspective view in which a part of the spiral-type electrode assembly used in the non-aqueous electrolyte secondary battery of FIG. 2 is unwound to show a positive electrode mixture layer formed on a surface of a positive electrode.

### DESCRIPTION OF EMBODIMENTS

An example embodiment will now be described by reference to the drawings. It is noted that a non-aqueous electrolyte secondary battery according to the present disclosure is not limited to the embodiment described below. Further, the drawings referred to in the description of the embodiment are illustrated schematically.

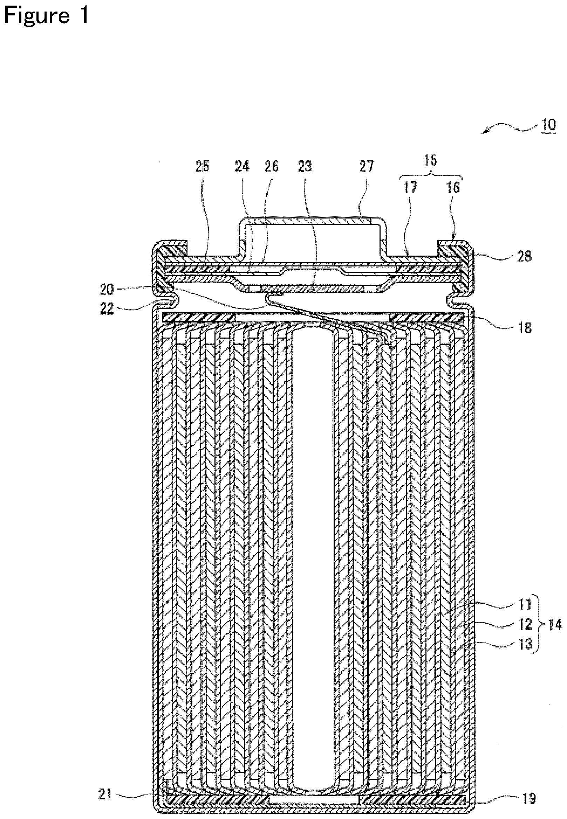

FIG. 1 is a cross-sectional view of a non-aqueous electrolyte secondary battery according to an example embodiment. The non-aqueous electrolyte secondary battery 10 shown in FIG. 1 comprises: a spiral-type electrode assembly 14 formed by winding a positive electrode 11 and a negative electrode 12 with an interposed separator 13; a non-aqueous electrolyte solution; insulation plates 18, 19 respectively arranged above and below the electrode assembly 14; and a battery housing 15 that houses the above-noted components. The battery housing 15 is composed of an outer can 16 and a sealing assembly 17 that closes the opening of the outer can 16. Instead of the spiral-type electrode assembly 14, electrode assemblies having other forms may be employed, such as a laminate-type electrode assembly formed by alternately laminating positive electrodes and negative electrodes with separators interposed. Further, examples of the battery housing 15 include bottomed tubular outer cans having a cylindrical shape, a rectangular shape, a coin shape, and a button shape, and a pouch-type outer casing formed by laminating a resin sheet and a metal sheet.

The outer can 16 is, for example, a bottomed cylindrical metal housing. A gasket 28 is provided between the outer can 16 and the sealing assembly 17 to ensure airtightness inside the battery. The outer can 16 has a projecting portion 22 where, for example, a part of a side surface portion projects inward, and which supports the sealing assembly 17. The projecting portion 22 is preferably formed in an annular shape along the circumferential direction of the outer can 16, and supports the sealing assembly 17 on its upper surface.

The sealing assembly 17 has a structure obtained by laminating, in order from the electrode assembly 14 side, a filter 23, a lower valve member 24, an insulation member 25, an upper valve member 26, and a cap 27. Each of the members constituting the sealing assembly 17 has, for example, a disk shape or a ring shape, and the respective members except the insulation member 25 are mutually electrically connected. The lower valve member 24 and the upper valve member 26 are connected to each other at their central portions, and the insulation member 25 is interposed between peripheral edge portions of these valve members. When the internal pressure of the non-aqueous electrolyte secondary battery 10 increases due to heat generation caused by internal short circuit or the like, for example, the lower valve member 24 deforms and ruptures in a manner pushing up the upper valve member 26 toward the cap 27, and the current path between the lower valve member 24 and the upper valve member 26 is thereby cut off. When the internal pressure increases further, the upper valve member 26 ruptures, and gas is discharged from an opening in the cap 27.

In the non-aqueous electrolyte secondary battery 10 shown in FIG. 1, a positive electrode lead 20 attached to the positive electrode 11 extends through a through hole in the insulation plate 18 and toward the sealing assembly 17, while a negative electrode lead 21 attached to the negative electrode 12 extends outside the insulation plate 19 and toward the bottom portion of the outer can 16. The positive electrode lead 20 is connected by welding or the like to the lower surface of the filter 23 which is the bottom plate of the sealing assembly 17, and the cap 27, which is the top plate of the sealing assembly 17 electrically connected to the filter 23, serves as the positive electrode terminal. The negative electrode lead 21 is connected by welding or the like to the inner surface of the bottom portion of the outer can 16, and the outer can 16 serves as the negative electrode terminal.

In the non-aqueous electrolyte secondary battery 10 shown in FIG. 1, the sealing assembly 17 side is referred to as the upper side, and the bottom portion side of the outer can 16 is referred to as the lower side. Further, the direction from the bottom portion of the battery housing 15 toward the sealing assembly 17 is referred to as the height direction of the non-aqueous electrolyte secondary battery 10.

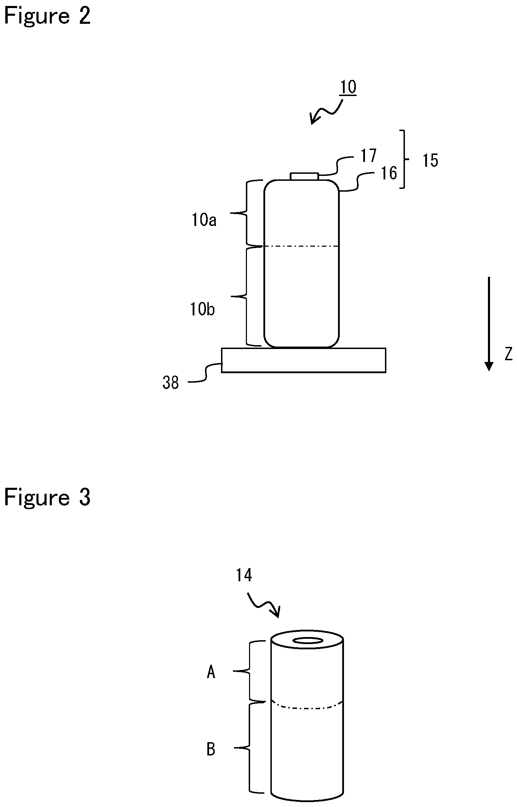

Next, manners in which the non-aqueous electrolyte secondary battery 10 of FIG. 1 may be fixed are described by reference to FIGS. 2 to 5.

FIG. 2 is a side view showing the non-aqueous electrolyte secondary battery 10 of FIG. 1 in a fixed state according to an example. The non-aqueous electrolyte secondary battery 10 of the present embodiment is preferably used as a stationary or positionally fixed power source installed indoors or outdoors, or as a power source installed in a mobile entity such as an electric vehicle. The non-aqueous electrolyte secondary battery 10 used as such a power source is, as shown in FIG. 2, installed in a fixing unit 38 such as a mount or a case, and is used in a fixed state. Being used in a fixed state means that the orientation of the non-aqueous electrolyte secondary battery 10 is not changed significantly after the non-aqueous electrolyte secondary battery 10 is installed in the fixing unit 38 and is started to be used. For example, a non-aqueous electrolyte secondary battery 10 used as a power source for a mobile phone does not correspond to a case of being used in a fixed state because the battery may be placed in all orientations during use of the mobile phone.

In FIG. 2, arrow Z points in the vertical direction (or the direction of gravity). That is, the non-aqueous electrolyte secondary battery 10 shown in FIG. 2 is erected along the vertical direction. Furthermore, the non-aqueous electrolyte secondary battery 10 shown in FIG. 2 is installed such that the bottom portion of the battery housing 15 is in contact with the fixing unit 38, and such that the height direction of the non-aqueous electrolyte secondary battery 10 is aligned with the vertical direction.

FIG. 3 is a perspective view of the spiral-type electrode assembly 14 used in the non-aqueous electrolyte secondary battery 10 of FIG. 2. A region A of the electrode assembly 14 shown in FIG. 3 is a region corresponding to the upper region 10a in FIG. 2. The region A includes a first region of a mixture layer of a first electrode, which will be described later. Further, a region B of the electrode assembly 14 shown in FIG. 3 is a region corresponding to the lower region 10b in FIG. 2. The region B includes a second region of the mixture layer of the first electrode, which will be described later.

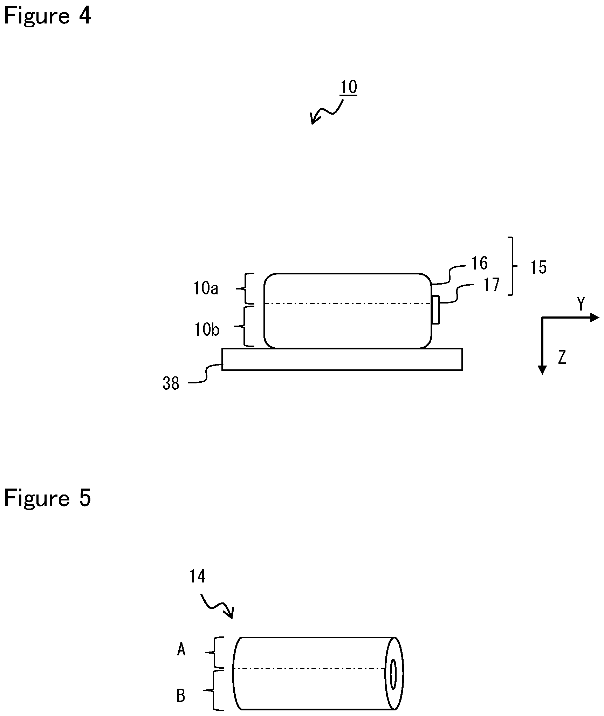

FIG. 4 is a side view showing the non-aqueous electrolyte secondary battery of FIG. 1 in a fixed state according to another example. In FIG. 4, an arrow Z points in the vertical direction (or the direction of gravity), and an arrow Y points in a direction (or horizontal direction) perpendicular to the vertical direction. The non-aqueous electrolyte secondary battery 10 shown in FIG. 4 is installed such that a side surface of the battery housing 15 is in contact with the fixing unit 38, and such that the height direction of the non-aqueous electrolyte secondary battery 10 is aligned with the direction (or horizontal direction) perpendicular to the vertical direction.

FIG. 5 is a perspective view of the spiral-type electrode assembly 14 used in the non-aqueous electrolyte secondary battery 10 of FIG. 4. A region A of the electrode assembly 14 shown in FIG. 5 is a region corresponding to the upper region 10a in FIG. 4. The region A includes a first region of a mixture layer of a first electrode, which will be described later. A region B of the electrode assembly 14 shown in FIG. 5 is a region corresponding to the lower region 10b in FIG. 4. The region B includes a second region of the mixture layer of the first electrode, which will be described later.

Next, each of the constituent elements of the non-aqueous electrolyte secondary battery 10 will be described in detail. In the following, an example in which the positive electrode 11 is the first electrode and the negative electrode 12 is the second electrode will be described. It is noted that the present embodiment is not limited to this example. For example, the negative electrode 12 may be the first electrode. Further, the second electrode may have the same features as the first electrode, and both of the positive electrode 11 and the negative electrode 12 may have the features of the first electrode.

### [Positive Electrode]

The positive electrode 11 comprises a positive electrode current collector and a positive electrode mixture layer provided on the positive electrode current collector. As the positive electrode current collector, it is possible to use a foil of a metal such as aluminum that is stable in the potential range of the positive electrode 11, a film having such a metal disposed on its surface layer, or the like. The positive electrode mixture layer includes, for example, a positive electrode active material, a binder, a conductive agent, and the like.

Examples of the positive electrode active material include lithium metal composite oxides containing transition metal elements such as Co, Mn, and Ni. The lithium transition metal composite oxides are, for example, LiₓCoC₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (where M is at least one of Na, Mg, Sc, Y, Mn, Fe, Co, Ni, Cu, Zn, Al, Cr, Pb, Sb, and B; 0 < x ≤ 1.2, 0 < y ≤ 0.9, and 2.0 ≤ z ≤ 2.3). A single type among these may be used alone, or a plurality of types may be mixed and used. In terms of enabling an increase in capacity of the non-aqueous electrolyte secondary battery, the positive electrode active material preferably contains a lithium nickel composite oxide such as LiₓNiO₂, LiₓCo_{y}Ni_{1-y}O₂, and LiₓNi_{1-y}M_{y}O_{z}, (where M is at least one of Na, Mg, Sc, Y, Mn, Fe, Co, Ni, Cu, Zn, Al, Cr, Pb, Sb, and B; 0 < x ≤ 1.2, 0 < y ≤ 0.9, and 2.0 ≤ z ≤ 2.3).

As the binder, it is possible to use, for example, fluororesins such as polytetrafluoroethylene (PTFE) and polyvinylidene fluoride (PVDF), polyacrylonitrile (PAN), polyimide (PI), acrylic resins, polyolefin resins, styrene-butadiene rubber (SBR), nitrile rubber (NBR), carboxymethyl cellulose (CMC) or a salt thereof, polyacrylic acid (PAA) or a salt thereof, polyvinyl alcohol (PVA), and the like. These may be used alone or by combining two or more thereof. The content of the binder in the positive electrode mixture layer is, for example, preferably 0.5 % by mass to 10 % by mass, and more preferably 1 % by mass to 5 % by mass, relative to the mass of the positive electrode mixture layer.

As the conductive agent, fibrous carbon or granular carbon can be used. Examples of fibrous carbon include carbon nanotubes (CNT), carbon nanofibers (CNF), vapor-grown carbon fibers (VGCF), electrospun carbon fibers, polyacrylonitrile (PAN) based carbon fibers, and pitch-based carbon fibers. These may be used alone or by combining two or more thereof.

Examples of granular carbon include carbon materials such as carbon black (CB), acetylene black (AB), Ketjen black, and graphite. These may be used alone or by combining two or more thereof.

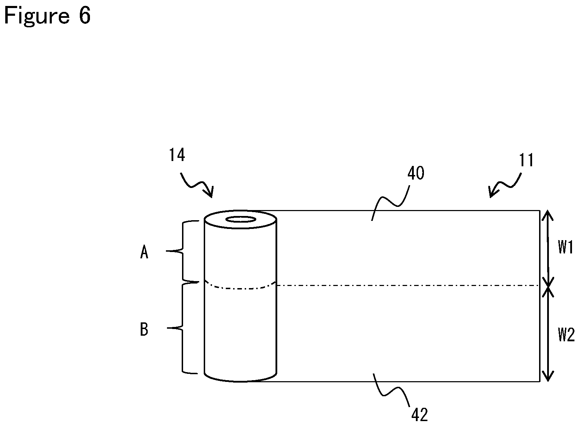

An example of the positive electrode mixture layer will be described below by reference to FIG. 6. FIG. 6 is a developed perspective view in which a part of the spiral-type electrode assembly 14 used in the non-aqueous electrolyte secondary battery 10 of FIG. 2 is unwound to show the positive electrode mixture layer formed on a surface of a positive electrode 11. It is noted that the positive electrode 11 is not limited to the following example. For example, in the positive electrode 11 in the example shown in FIG. 5, the first region and the second region are configured in a manner different from the following example, and the advantageous effects of the present disclosure are achieved.

In FIG. 6, the positive electrode mixture layer has a first region 40 located toward an upper part in the vertical direction and a second region 42 located toward a lower part in the vertical direction. In other words, assuming that the direction in which the electrode assembly 14 is inserted into the outer can 16 is the insertion direction, the positive electrode mixture layer has the first region 40 located toward the sealing assembly 17 in the insertion direction, and the second region 42 located toward the bottom portion of the outer can 16 in the insertion direction.

The porosity of the positive electrode mixture layer in the first region 40 is higher than the porosity of the positive electrode mixture layer in the second region 42. With this feature, the non-aqueous electrolyte solution is inhibited from being unevenly densely distributed in the lower part in the vertical direction, so that the charge-discharge cycle characteristic can be improved. In a non-aqueous electrolyte secondary battery 10 used in a fixed state, the non-aqueous electrolyte solution inside the battery housing 15 tends to be unevenly densely distributed in a lower part in the vertical direction due to gravity, and tends to be depleted in an upper part in the vertical direction. Such uneven distribution of the non-aqueous electrolyte solution would lead to degradation of the charge-discharge cycle characteristic. However, by configuring such that the porosity of the positive electrode mixture layer in the first region 40 is higher than the porosity of the positive electrode mixture layer in the second region 42, the property of retaining the non-aqueous electrolyte solution in the upper part in the vertical direction is improved. Although the present embodiment has been described above by referring, by way of example, to the non-aqueous electrolyte secondary battery 10 comprising a bottomed tubular battery housing having a cylindrical shape and a spiral-type electrode assembly, similar advantageous effects can be obtained in the case of a non-aqueous electrolyte secondary battery comprising a bottomed tubular battery housing having a rectangular shape and a laminate-type electrode assembly, or the like.

The porosities of the positive electrode mixture layer in the first region 40 and the second region 42 are, for example, 10 % by volume to 40 % by volume. Porosity of the positive electrode mixture layer is calculated according to the formula below based on the bulk density of the positive electrode mixture layer, and also based on the true density and contained mass of each of the components contained in the positive electrode mixture layer such as the positive electrode active material, the conductive agent, the binder, and the like. Since the bulk density of the positive electrode mixture layer can be changed by adjusting the compression ratio of the positive electrode mixture layer, the porosity of the positive electrode mixture layer can be changed. Porosity of positive electrode mixture layer = 1 - (sum of (contained mass / true density) values of respective components × bulk density of positive electrode mixture layer)

The content of the conductive agent in the first region 40 is, for example, 0.01 % by mass to 1 % by mass relative to the mass of the positive electrode mixture layer in the first region 40. The content of the conductive agent in the second region 42 is, for example, 0.1 % by mass to 5 % by mass relative to the mass of the positive electrode mixture layer in the second region 42.

The conductive agent contained in the first region 40 includes fibrous carbon, and the conductive agent contained in the second region 42 includes granular carbon. Compared to granular carbon, fibrous carbon can provide equivalent or higher conductivity with a smaller content. Therefore, by including fibrous carbon in the first region 40 and including granular carbon in the second region 42, good conductivity can be obtained in both of the first region 40 and the second region even when the content of the conductive agent in the first region 40 is made lower than the content of the conductive agent in the second region 42.

Preferably, the fibrous carbon is CNT, and the granular carbon is AB. The CNT may be either single-walled carbon nanotubes (SWCNT) or multi-walled carbon nanotubes (MWCNT), and preferably includes MWCNT. The diameter of the CNT is, for example, 0.5 nm to 100 nm, and the length of the CNT is, for example, 0.1 µm to 40 µm.

The ratio of the width W 1 of the first region 40 to the width W2 of the second region 42 is preferably in the range of 1:9 to 7:3, more preferably in the range of 2:8 to 6:4, and particularly preferably in the range of 3:7 to 5:5. In order to inhibit the non-aqueous electrolyte solution from being unevenly densely distributed in a lower part in the vertical direction, the width W1 of the first region 40 is preferably no smaller than the width W2 of the second region 42.

The difference between the surface resistivity in the first region 40 and the surface resistivity in the second region 42 is preferably 20 % or less, more preferably 10 % or less, and particularly preferably 5 % or less relative to the surface resistivity in the second region 42. With this feature, the degrees of deterioration in the first region 40 and the second region 42 can be made more uniform, so that the charge-discharge cycle characteristic can be notably improved. Here, surface resistivity can be measured with a commercially available device using a positive electrode mixture layer coated on a surface of a PET film or the like.

It is noted that in a case where the non-aqueous electrolyte secondary battery 10 is fixed in an orientation vertically inverted from that of the example shown in FIG. 2 so that an upper part of the battery housing 15 is in contact with the fixing unit 38 and the height direction of the non-aqueous electrolyte secondary battery 10 is aligned with the vertical direction, the porosity of the positive electrode mixture layer in the second region 42 is higher than the porosity of the positive electrode mixture layer in the first region 40, and the content of the conductive agent in the second region 42 is lower than the content of the conductive agent in the first region 40. Furthermore, the conductive agent contained in the second region 42 includes fibrous carbon, and the conductive agent contained in the first region 40 includes granular carbon.

Next, an example method for producing the positive electrode 11 will be described. For example, a positive electrode mixture slurry A for the first region 40 is prepared by mixing, together with a solvent, a positive electrode active material, a binder, and fibrous carbon serving as a conductive agent. Further, a positive electrode mixture slurry B for the second region 42 is prepared by mixing, together with a solvent, a positive electrode active material, a binder, and granular carbon serving as a conductive agent. The binder content in each of the positive electrode mixture slurry A and the positive electrode mixture slurry B is, for example, preferably 0.1 % by mass to 10 % by mass, and more preferably 0.5 % by mass to 5 % by mass relative to the total mass of the solid content. Subsequently, for example, in the case of a non-aqueous electrolyte secondary battery 10 to be used in the state shown in FIG. 2, the positive electrode mixture slurry A and the positive electrode mixture slurry B are applied onto a positive electrode current collector along its longitudinal direction in stripes which are adjacent to each other in the width direction perpendicular to the longitudinal direction. Alternatively, in the case of a non-aqueous electrolyte secondary battery 10 to be used in the state shown in FIG. 4, the positive electrode mixture slurry A and the positive electrode mixture slurry B are applied onto a positive electrode current collector alternately along its longitudinal direction in predetermined lengths. Then, by drying the applied slurry and rolling the applied coating (i.e., a positive electrode mixture layer), the positive electrode 11 can be formed.

### [Negative Electrode]

The negative electrode 12 comprises a negative electrode current collector and a negative electrode mixture layer provided on the negative electrode current collector. As the negative electrode current collector, it is possible to use a foil of a metal such as copper that is stable in the potential range of the negative electrode, a film having such a metal disposed on its surface layer, or the like. The negative electrode mixture layer includes, for example, a negative electrode active material, a binder, a conductive agent, and the like. The negative electrode 12 can be produced by, for example, applying a negative electrode mixture slurry containing the negative electrode active material, the binder, the conductive agent, and the like onto both sides of the negative electrode current collector, drying the applied coating, and then rolling the applied coating (i.e., a negative electrode mixture layer).

The negative electrode active material is, for example, a material that can reversibly occlude and release lithium ions, and examples thereof include carbon materials such as natural graphite and artificial graphite, metals that form an alloy with lithium such as silicon (Si) and tin (Sn), and alloys and composite oxides containing metal elements such as Si and Sn.

Examples of the binder include fluororesins such as polytetrafluoroethylene (PTFE) and polyvinylidene fluoride (PVDF), polyacrylonitrile (PAN), polyimide (PI), acrylic resins, polyolefin resins, styrene-butadiene rubber (SBR), nitrile rubber (NBR), carboxymethyl cellulose (CMC) or a salt thereof, polyacrylic acid (PAA) or a salt thereof, and polyvinyl alcohol (PVA). These may be used alone or by combining two or more thereof. The content of the binder in the negative electrode mixture layer is, for example, preferably 0.5 % by mass to 10 % by mass, and more preferably 1 % by mass to 5 % by mass relative to the mass of the negative electrode mixture layer.

As the conductive agent, fibrous carbon or granular carbon can be used. Examples of the fibrous carbon include carbon nanotubes (CNT), carbon nanofibers (CNF), vapor-grown carbon fibers (VGCF), electrospun carbon fibers, polyacrylonitrile (PAN) based carbon fibers, and pitch-based carbon fibers. These may be used alone or by combining two or more thereof. The fibrous carbon may include CNT. The CNT may be either single-walled carbon nanotubes (SWCNT) or multi-walled carbon nanotubes (MWCNT), and preferably includes MWCNT. The diameter of the CNT is, for example, 0.5 nm to 100 nm, and the length of the CNT is, for example, 0.1 µm to 40 µm.

Examples of the granular carbon include carbon materials such as carbon black (CB), acetylene black (AB), Ketjen black, and graphite. These may be used alone or by combining two or more thereof.

Although configuration of the negative electrode mixture layer of the negative electrode 12 is not particularly specified in the present embodiment, the negative electrode 12 may have the first region and the second region as with the positive electrode 11.

### [Separator]

As the separator 13, for example, a porous sheet having ion permeability and insulation property is used. Specific examples of the porous sheet include a microporous thin film, woven fabric, and non-woven fabric. As the material of the separator, olefin resins such as polyethylene and polypropylene, cellulose, and the like are suitable. The separator 13 may be a laminate having a cellulose fiber layer and a layer of thermoplastic resin fibers made of olefin resin or the like. Further, the separator may be a multilayer separator including a polyethylene layer and a polypropylene layer. It is also possible to use a separator having a surface coated with a material such as aramid resin or ceramic.

### [Non-Aqueous Electrolyte Solution]

The non-aqueous electrolyte solution contains a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least a part of hydrogen atoms in the above solvents with halogen atoms such as fluorine.

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone and γ-valerolactone; and chain carboxylate esters such as methyl acetate, ethyl acetate, propyl acetate, methyl propionate (MP), and ethyl propionate.

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-di ethoxy ethane, triethylene glycol dimethyl ether, and tetraethylene glycol dimethyl ether.

As the above-noted halogen-substituted product, it is preferable to use fluorinated cyclic carbonate esters such as fluoroethylene carbonate (FEC), fluorinated chain carbonate esters, fluorinated chain carboxylate esters such as methyl fluoropropionate (FMP), and the like.

The electrolyte salt is preferably lithium salt. Examples of lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borates such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) (where each of l and m is an integer of 1 or greater). As the lithium salt, a single type among the above may be used alone, or a plurality of types may be mixed and used. Among the foregoing, it is preferable to use LiPF₆ in consideration of ion conductivity, electrochemical stability, and the like. The concentration of the lithium salt is preferably 0.8 to 1.8 mol per 1 liter of the solvent.

### EXAMPLES

While the present disclosure will be further described below using Examples, the present disclosure is not limited to these Examples.

### <Example 1>

### [Production of Positive Electrode]

### (Preparation of Positive Electrode Mixture Slurry A)

A positive electrode mixture slurry A with a solid content of 70 % by mass was prepared by mixing 98 parts by mass of LiNi_{0.8}Co_{0.15}Al_{0.05}O₂, 0.25 parts by mass of multi-walled carbon nanotubes (MWCNT), and 1 part by mass of polyvinylidene fluoride (PVDF) having an average molecular weight of 1.1 million, and adding thereto an appropriate amount of N-methyl-2-pyrrolidone (NMP).

### (Preparation of Positive Electrode Mixture Slurry B)

A positive electrode mixture slurry B with a solid content of 70 % by mass was prepared by mixing 98 parts by mass of LiNi_{0.8}Co_{0.15}Al_{0.05}O₂, 1 part by mass of acetylene black (AB), and 1 part by mass of polyvinylidene fluoride (PVDF) having an average molecular weight of 1.1 million, and adding thereto an appropriate amount of NMP.

Next, onto a strip-shaped positive electrode current collector made of aluminum foil, the positive electrode mixture slurry A and the positive electrode mixture slurry B were applied in stripes along the longitudinal direction, and dried. Also on the reverse side, the slurries were applied and dried in the same manner. After rolling the dried coating using a roller, the product was cut into a predetermined electrode plate size, and a positive electrode having positive electrode mixture layers formed on both sides of the positive electrode current collector was thereby produced. The positive electrode mixture layers had a configuration similar to that shown in FIG. 6, and were formed by applying the positive electrode mixture slurry A to the first region and applying the positive electrode mixture slurry B to the second region. The ratio of the width W1 of the first region to the width W2 of the second region was 4:6. The porosity in the first region was 28.8 % by volume, and the porosity in the second region was 26.4 %. Further, at a substantially central part in the longitudinal direction of the positive electrode, there was provided an exposed positive electrode portion where the mixture layer was absent and a surface of the current collector was exposed, and an aluminum positive electrode lead was welded to the exposed positive electrode portion.

### [Production of Negative Electrode]

A negative electrode mixture slurry was prepared by mixing 100 parts by mass of graphite, 1 part by mass of carboxymethyl cellulose (CMC), and 1 part by mass of styrene-butadiene rubber (SBR), and adding thereto an appropriate amount of water. The negative electrode mixture slurry was applied onto a strip-shaped negative electrode current collector made of copper foil, and dried. Also on the reverse side, the slurry was applied and dried in the same manner. After rolling the dried coating using a roller, the product was cut into a predetermined electrode plate size, and a negative electrode having negative electrode mixture layers formed on both sides of the negative electrode current collector was thereby produced. At an inner winding end portion, there was provided an exposed negative electrode portion where the negative electrode mixture layer was absent and a surface of the negative electrode current collector was exposed, and a nickel negative electrode lead was welded to the exposed negative electrode portion.

### [Preparation of Non-Aqueous Electrolyte Solution]

A non-aqueous electrolyte solution was prepared by dissolving LiPF₆ in a mixed solvent composed of ethylene carbonate (EC), dimethyl carbonate (DMC), and diethyl carbonate (DEC).

### [Production of Cylindrical Secondary Battery]

(1) The positive electrode and the negative electrode were wound with an interposed polyethylene separator having a thickness of 20 µm, and a spiral-type electrode assembly was thereby produced.
(2) The electrode assembly was inserted into an outer can. The negative electrode lead was welded to the bottom portion of the outer can, and the positive electrode lead was welded to a sealing assembly. Assuming that the direction in which the electrode assembly was inserted into the outer can was the insertion direction, it was configured such that the first region was located toward the sealing assembly in the insertion direction, and the second region was located toward the bottom portion of the outer can in the insertion direction.
(3) The non-aqueous electrolyte solution was injected into the outer can, and then the open end portion of the outer can was crimped to the sealing assembly via a gasket. The product was used as a cylindrical secondary battery.

### <Example 2>

A cylindrical secondary battery was produced in the same manner as in Example 1 except that, in the preparation of the positive electrode mixture slurry A for producing the positive electrode, the amount of the MWCNT added was changed to 0.2 parts by mass. The porosity in the first region was 29.0 % by volume, and the porosity in the second region was 26.4 %.

### <Comparative Example 1>

A cylindrical secondary battery was produced in the same manner as in Example 1 except that, in the production of the positive electrode, the positive electrode mixture layers were formed by applying the positive electrode mixture slurry B to the first region and applying the positive electrode mixture slurry A to the second region. The porosity in the first region was 26.4 % by volume, and the porosity in the second region was 28.8 %.

### <Comparative Example 2>

A cylindrical secondary battery was produced in the same manner as in the Example except that only the positive electrode mixture slurry B was used, and the positive electrode mixture slurry B was applied to the entire positive electrode current collector. The porosity of the positive electrode mixture layer was 26.4 % by volume.

### <Comparative Example 3>

A cylindrical secondary battery was produced in the same manner as in the Example except that only the positive electrode mixture slurry A was used, and the positive electrode mixture slurry A was applied to the entire positive electrode current collector. The porosity of the positive electrode mixture layer was 28.8 % by volume.

### [Evaluation of Charge-Discharge Cycle Characteristic]

Each of the cylindrical secondary batteries of the Examples and Comparative Examples was installed on a mount such that the bottom portion of the non-aqueous electrolyte secondary battery was in contact with the mount, and such that the height direction of the battery was aligned with the vertical direction. Subsequently, in a temperature environment of 25 °C, each cylindrical secondary battery was subjected to constant current charging at a current of 0.5 It until the voltage reached 4.2 V, and was then subjected to constant voltage charging at a voltage of 4.2V until the current reached 0.05 It. Subsequently, constant current discharging was performed with a current of 0.5 It until the voltage reached 2.5 V. Using this charging and discharging cycle as one cycle, 1000 cycles were carried out, and the capacity retention rate was determined by the following formula. Capacity retention rate (%) = (Discharge capacity in the 1000th cycle / Discharge capacity in the 1st cycle) × 100

### [Measurement of Surface Resistivity of Positive Electrode Mixture Layer]

Measurement samples were prepared in the same manner as in the Examples and Comparison Examples except that, in the production of the positive electrode, a PET film was used instead of the positive electrode current collector, and a positive electrode mixture layer was formed on one side of the PET film. Regarding each of the measurement samples of the Examples and Comparison Examples, Loresta-GP manufactured by Mitsubishi Chemical Corporation was used to measure surface resistivity by a two-terminal method (at 25 °C) using an AP probe. As to Examples 1 and 2 and Comparative Example 1, measurement was performed in each of the first region and the second region.

Table 1 shows the results of the capacity retention rates for the cylindrical secondary batteries of the Examples and Comparative Examples. Table 1 also shows the type and content of the conductive agent, porosity, and surface resistivity in the first region and those in the second region.

**[Table 1]**

| | Conductive agent type / content [mass%] | | Porosity [volume%] | | Surface resistivity [Ωm] | | Capacity retention rate |
|---|---|---|---|---|---|---|---|
| | 1st region | 2nd region | 1st region | 2nd region | 1st region | 2nd region | |
| Example 1 | CNT 0.25 | AB1 | 28.8 | 26.4 | 17.1 | 17.4 | 79 |
| Example 2 | CNT 0.20 | AB1 | 29.0 | 26.4 | 20.8 | 17.4 | 76 |
| Comparative Example 1 | AB 1 | CNT 0.25 | 26.4 | 28.8 | 17.4 | 17.1 | 57 |
| Comparative Example 2 | AB | | 26.4 | | 17.4 | | 62 |
| | 1 | | | | | | |
| Comparative Example 3 | CNT | | 28.8 | | 17.1 | | 68 |
| | 0.25 | | | | | | |

It can be seen that, in the cylindrical secondary batteries of Examples 1 and 2, the capacity retention rate was higher and the charge-discharge cycle characteristic was better than in the cylindrical secondary batteries of Comparative Examples 1 to 3. Further, the ratio of difference between the surface resistivity in the first region and the surface resistivity in the second region relative to the surface resistivity in the second region was 1.7 % in the cylindrical secondary battery of Example 1, and 19.5 % in the cylindrical secondary battery of Example 2. Example 1 in which this difference was relatively small had a capacity retention rate higher than the capacity retention rate in Example 2.

### REFERENCE SIGNS LIST

10 non-aqueous electrolyte secondary battery; 10a upper region; 10b lower region; 11 positive electrode; 12 negative electrode; 13 separator; 14 electrode assembly; 15 battery housing; 16 outer can; 17 sealing assembly; 18, 19 insulation plate; 20 positive electrode lead; 21 negative electrode lead; 22 projecting portion; 23 filter; 24 lower valve member; 25 insulation member; 26 upper valve member; 27 cap; 28 gasket; 38 fixing unit; 40 first region; 42 second region.

## Claims

1. A non-aqueous electrolyte secondary battery, comprising
an electrode assembly in which a first electrode and a second electrode having polarities different from each other are located facing each other across a separator, and a battery housing that houses the electrode assembly, wherein
the first electrode has a mixture layer containing a conductive agent,
when the non-aqueous electrolyte secondary battery is used in a fixed state, the mixture layer has a first region located toward an upper part in a vertical direction, and a second region located toward a lower part in the vertical direction,
porosity of the mixture layer in the first region is higher than porosity of the mixture layer in the second region, and
content of the conductive agent in the first region is lower than content of the conductive agent in the second region, and the conductive agent contained in the first region includes fibrous carbon, while the conductive agent contained in the second region includes granular carbon.

2. A non-aqueous electrolyte secondary battery, comprising
an electrode assembly in which a first electrode and a second electrode having polarities different from each other are located facing each other across a separator, a bottomed tubular outer can that houses the electrode assembly, and a sealing assembly that closes an opening of the outer can, wherein
the first electrode has a mixture layer containing a conductive agent,
assuming that a direction in which the electrode assembly is inserted into the outer can is an insertion direction, the mixture layer has a first region located toward the sealing assembly in the insertion direction, and a second region located toward a bottom portion of the outer can in the insertion direction,
porosity of the mixture layer in the first region is higher than porosity of the mixture layer in the second region, and
content of the conductive agent in the first region is lower than content of the conductive agent in the second region, and the conductive agent contained in the first region includes fibrous carbon, while the conductive agent contained in the second region includes granular carbon.

3. The non-aqueous electrolyte secondary battery according to claim 1 or 2, wherein a difference between surface resistivity in the first region and surface resistivity in the second region is 20 % or less relative to the surface resistivity in the second region.

4. A non-aqueous electrolyte secondary battery, comprising
an electrode assembly in which a first electrode and a second electrode having polarities different from each other are located facing each other across a separator, a bottomed tubular outer can that houses the electrode assembly, and a sealing assembly that closes an opening of the outer can, wherein
the first electrode has a mixture layer containing a conductive agent,
assuming that a direction in which the electrode assembly is inserted into the outer can is an insertion direction, the mixture layer has a first region located toward the sealing assembly in the insertion direction, and a second region located toward a bottom portion of the outer can in the insertion direction,
porosity of the mixture layer in the second region is higher than porosity of the mixture layer in the first region, and
content of the conductive agent in the second region is lower than content of the conductive agent in the first region, and the conductive agent contained in the second region includes fibrous carbon, while the conductive agent contained in the first region includes granular carbon.

5. The non-aqueous electrolyte secondary battery according to claim 4, wherein a difference between surface resistivity in the second region and surface resistivity in the first region is 20 % or less relative to the surface resistivity in the first region.

6. The non-aqueous electrolyte secondary battery according to any one of claims 1 to 5, wherein the fibrous carbon is carbon nanotubes, and the granular carbon is acetylene black.
